# EUROPEAN PATENT SPECIFICATION

(11) **EP 3 876 748 B1**
(45) Date of publication and mention of the grant of the patent: **24.09.2025**
(21) Application number: 19882802.2
(22) Date of filing: 08.11.2019
(51) Int. Cl.: A23K 10/20, A23K 50/42

(54) **EDIBLE PET CHEWS AND METHODS OF FORMING THE SAME**
ESSBARE HAUSTIERKAUPRODUKTE UND VERFAHREN ZUR FORMUNG DAVON
ARTICLES À MÂCHER COMESTIBLES POUR ANIMAUX DE COMPAGNIE ET LEURS PROCÉDÉS DE FABRICATION

(30) Priority: 09.11.2018 US 201862758375 P
(43) Date of publication of application: 15.09.2021
(73) Proprietor: IMS Trading, LLC, Jamesburg NJ 08831 (US)
(72) Inventor: AXELROD, Glen S., Colts Neck, New Jersey 07722 (US)
(74) Representative: Richly & Ritschel Patentanwälte PartG mbB
(86) International application number: PCT/US2019/060444
(87) International publication number: WO 2020/097447

(56) References cited:
- EP-A1- 3 037 002
- CN-A- 107 801 654
- US-A- 616 465
- US-A1- 2008 145 485
- US-A1- 2009 235 872
- US-A1- 2012 034 348
- US-A1- 2013 189 397
- US-A1- 2017 223 930

## Description

### FIELD

The present disclosure is drawn to pet chews including a first component and a second component. In particular, the present disclosure is drawn to pet chews that include a first component that includes fibrous connective tissue and a second component that includes internal organ tissue. Methods of making such chews are also described. The scope of protection is defined in the claims.

### BACKGROUND

Pets, such as dogs, are known to enjoy chewing on foreign objects. Over the years, effort has been made to develop a pet chew that lasts relatively long when chewed on by an animal (i.e., is relatively durable), and which also spikes an interest in the animal to engage with the chew. In that regard, various edible pet chews have been prepared from consumable material such as meat (e.g., chicken, fish, and the like), and have gained popularity in the marketplace. Such edible chews are not very durable, however, and are often consumed quickly by an animal. Consequently, many edible chews do not engage a pet for a significant length of time.
US 616 465 A describes an artificial whale bone. EP 3 037 002 A1 describes a pet food including a core and a covering portion, in which the ratio of the hardness of the covering portion to the core is 2 or greater. US 2008/145485 A1 describes a pet treat including an outer layer of meat and an inner layer of rawhide that has been flavored with meat. An intermediate layer of glutin is formed during the manufacturing process and affixes the outer layer of meat to the inner layer of rawhide.

Relatively recently, bully sticks have become a popular edible chew alternative. The term "bully stick" is a reference to a digestible pet chew made of dried steer or bull penis, or "pizzle." Bully sticks are relatively durable and have a strong flavor, and thus often capture the interest of animals. Bully sticks are also believed to mimic the ancestral diet of the canine diet, which may explain the generally high interest dogs have in such chews. As the supply of bull/steer pizzle is relatively limited, however, bully sticks are relatively expensive. A need therefore remains for the development of pet chews that capture an animal's interest, are long lasting, and contain natural components, but which can be manufactured in quantity at a reasonable cost.

### BRIEF DESCRIPTION OF THE DRAWINGS

Features and advantages of the claimed subject matter will be apparent from the following detailed description of embodiments consistent therewith, which description should be considered with reference to the accompanying drawings, wherein:
FIG. 1 is a cross sectional diagram of one example of a pet chew and not part of the invention;
FIG. 2 is a cross sectional diagram of another example of a pet chew and not part of the invention;
FIG. 3 depicts an example of a pet chew consistent with the present disclosure;
FIG. 4 depicts another example of a pet chew consistent with the present disclosure; and
FIG. 5 is a flow chart of example operations of one example method of forming a pet chew consistent with the present disclosure.

### DETAILED DESCRIPTION

As used herein, the term "coupled" when used to describe the relationship between two components means that the two components are joined together in some fashion, e.g., mechanically (e.g., by a mechanical fastener, interference fit, shrink fit, or a combination thereof), chemically (e.g., by physical or chemical bond, an adhesive, or the like), or a combination thereof. In embodiments, the pet chews described herein include a second component that is mechanically coupled to a first component, e.g., by a fastener, a form locking connection, an interference fit connection, a shrink fit connection, combinations thereof, and the like. In those or other embodiments, the first and second components may also be coupled to each other, e.g., by a natural edible component such as an edible adhesive.

As used herein the term "on," when used to describe the physical position of a second component relative to a first component, means that the second component is disposed above an outer surface of the first component, but does not require the second component to be in direct contact with the outer surface of the first component. In contrast, the term "directly on" when used to describe the physical position of a second component relative to a first component means that the second component is in direct contact with the outer surface of the first component.

As used herein the term "fibrous connective tissue" refers to connective tissue of an animal that is substantially made up of fibers, particularly acellular collagen fibers. Fibrous connective tissue may also be referred to as "dense connective tissue" and is distinguished from smooth and skeletal muscle in that fibrous connective tissue fibers are generally cables of acellular collagen fibers, whereas smooth and skeletal muscle "fibers" are cells. Non-limiting examples of fibrous connective tissue include ligaments, tendons, and sclera of an animal, preferably a mammal. As used herein, the terms "tendon" and "tendon tissue" refer to the relatively flexible and generally fibrous collagen tissue that attaches muscle to bones. In embodiments, the fibrous connective tissue or, more specifically, tendon tissue used herein includes parallel arrays of collagen fibers.

In embodiments, the fibrous connective tissues described herein include or are in the form of one or more ligaments, tendons, or sclera of a quadruped mammal, such as a bovine (e.g., a beefalo, buffalo, cow, steer, water buffalo etc.), equines (e.g., a donkey, horse, zebra, etc.). a camel, a deer, a goat, a sheep, a swine (pig), or the like. Although such animals may be preferred sources of fibrous connective tissue, the present disclosure is not limited thereto and fibrous connective tissue may be sourced from any suitable animal. For example, in some embodiments fibrous connective tissue may be sourced from one or more species of fish.

As used herein, the term "internal organ tissue" refers to tissue of one or more internal organs of an animal, preferably of a mammal. Non-limiting examples of internal organ tissue that may be used in the present disclosure include esophageal tissue, intestinal tissue, gall bladder tissue, heart tissue, stomach tissue, liver tissue, ureter tissue, urinary bladder tissue, or a combination of two or more thereof. Without limitation, in embodiments the internal organ tissue described herein is or includes urinary bladder tissue. Internal organ tissue may be provided from any suitable source. Without limitation, the internal organ tissue is sourced from one or more quadruped mammals, such as those noted above as being suitable sources of fibrous connective tissue.

One aspect of the present disclosure relates to pet chews that include a first component and a second component that is coupled to the first component. The first component includes fibrous connective tissue, and the second component includes internal organ tissue. The first component and the second component are each in a form of a strip and the strips of the first component and the second component are coupled by being helically wound around one another.

In embodiments, the first component is or includes ligament tissue, tendon tissue, or a combination thereof, and the second component is or includes internal organ tissue, preferably, urinary bladder tissue. In such embodiments the first and second components may both be sourced from a bovine or other suitable animal source. Without limitation, in some embodiments the first and second components are both sourced from a bovine, such as a cow, steer, or buffalo. In other embodiments, the first component is ligament tissue, tendon tissue, or a combination thereof sourced from a bovine, and the second component is or includes urinary bladder tissue sourced from a bovine or a swine.

The first component and second component may each have an initial moisture content. For clarity, the initial moisture content of the first component is referred to herein as the "first initial moisture content" and the initial moisture content of the second component is referred to herein as the "second initial moisture content." The first initial moisture content may range from 50 to 80 weight %, such as from 60 to 70 weight %, relative to the total weight of the first component. The second initial moisture content may range from 70 to 95 weight %, such as from 80 to 90 weight %, relative to the total weight of the second component. In embodiments, the first and second initial moisture contents are within the above noted respective ranges, and the second initial moisture content is greater than the first initial moisture content.

As will be described in detail below, a pet chew may be provided by combining first and second components with respective first and second initial moisture contents noted above, and drying the resultant combination until the first component has a first final moisture content and the second component has a second final moisture content. Such drying may be performed in any suitable manner, such as via air-drying, heat drying, vacuum drying, freeze drying, spray drying, or a combination of two or more thereof.

Following drying the first component may have a first final moisture content ranging from 0.1 to 20 weight %, such as 0.1 to 18 weight %, 10 to 20 weight %, or even 12 to 18 weight %, relative to the total weight of the first component (post drying). In embodiments, the first component is or includes tendon tissue, ligament tissue, or a combination thereof, and the first final moisture content preferably ranges from 10 to 20 weight %, such as 12 to 18 weight %, relative to the total weight of the first component (post drying).

Likewise, following drying the second component may have a second final moisture content ranging from 0.1 to 20 %, such as 10 to 20 weight %, 10 to 15 weight %, relative to the total weight of the first component (post drying). In embodiments, the second component is or includes urinary bladder tissue and the second final moisture content ranges from 10 to 20 weight %, such as from 10 to 15 weight %, relative to the total weight of the second component (post drying). In still further embodiments, the first component is or includes tendon tissue, ligament tissue, or a combination thereof, the second component includes urinary bladder tissue, the first final moisture content ranges from 10 to 20 weight % (e.g., 12 to 18 weight %) relative to the total weight of the first component (post drying), and the second final moisture content ranges from 10 to 20 weight % (e.g., 10 to 15 weight %) relative to the total weight of the second component (post drying)

Prior to drying, the first component may be combined with the second component in any suitable manner. In embodiments, the first and second components are combined by overlaying, twisting, and/or braiding the first and second components. For example, the first component may be in the form of a strip of tissue that has a long dimension (e.g., length) and a short dimension (e.g., width), wherein the long dimension of the first component is oriented along an axis (hereinafter, "axis Z"). In such instances strip of the first component may have a circular, ellipsoidal, rectangular, square, other geometric or irregular cross section. In embodiments, the first component is or includes tendon tissue, ligament tissue, or a combination thereof, and is in the form of one or more strips having a length of up to 50 centimeters (cm; i.e., 20 inches), such as from 2.5 cm to 50 cm (i.e., 1 to 20 inches), 15.2 cm to 35.6 cm (i.e., 6 to 14 inches), or even 20.3 cm to 30.5 cm (i.e., 8 to 12 inches), and a width of up to 7.62 cm (3 inches).

Regardless of the shape of the first component, the second component may be in the form of one or more strips of internal organ tissue. Like the first component, the strip(s) of second component may have a short dimension (e.g., width), a long dimension (e.g., length), and a cross section that has a circular, ellipsoidal, rectangular, square, other geometric, or irregular shape. For example, the second component may be of a strip of or including internal organ tissue (e.g., urinary bladder tissue), wherein the strip has a width ranging from 1.0 to 25.4 millimeters (mm) (0.04 to 1 inch) and a length ranging from 2.5 to 50 cm (i.e., 1 to 20 inches).

In embodiments, one or more strips of the second component may be overlaid on one or more strips of the first component and across or along the axis Z. For example, strips of second component may be overlaid on one or more strips of the first component and oriented in a direction perpendicular or substantially perpendicular to axis Z, in a direction parallel or substantially parallel to axis Z, or at any angle therebetween. Alternatively, the strip(s) of second component may be twisted with the strip(s) of first component around the axis Z. Still further, the strip(s) of second component may be wrapped around one or more of the strip(s) of first component and around the axis Z. As yet another alternative, the strip(s) of the second component may be braided with the strip(s) of the first component around the axis Z. In any case, the resultant combination of the first and second component (i.e. a pet chew precursor) may be dried to form a pet chew. Following drying, the first and second components may each have a respective first and second final moisture content, as discussed above.

Before or after drying, a natural edible component may be provided on an outer surface of the first component, an outer surface of the second component, or both. In embodiments, the natural edible component is disposed on at least a portion of the outer surface of the first component. For example, the natural edible component may be in the form of an edible adhesive coating that includes or is in the form of casein, cornstarch, glycerin, cellulose, or a combination thereof. In embodiments, the natural edible component includes one or more additives, such as flavoring agents, vitamins, minerals, scents, etc., as desired. In any case, the natural edible component may function to enhance coupling of the first and second component, e.g., by providing an adhesive bond there between.

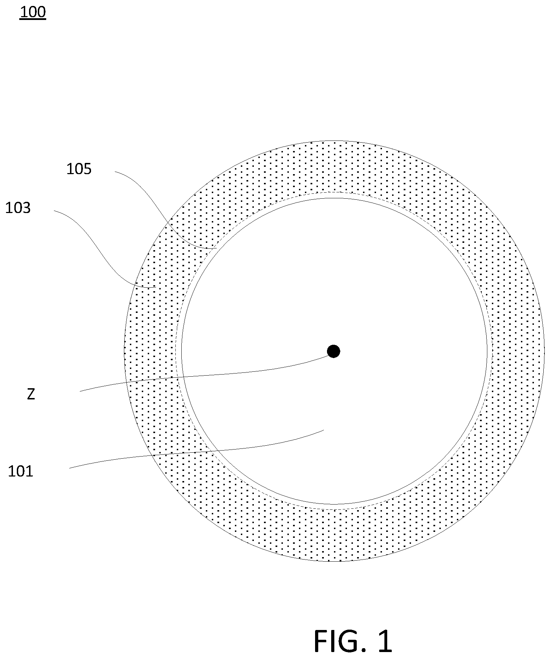

FIG. 1 is a cross sectional diagram of one example of a pet chew not forming part of the invention. As shown, pet chew 100 includes a first component 101 and a second component 103. Consistent with the foregoing discussion, first component 101 is or includes fibrous connective tissue, such as but not limited to ligament tissue, tendon tissue, sclera tissue, or a combination thereof. Likewise, second component 103 is or includes internal organ tissue, such as but not limited to esophageal tissue, intestinal tissue, gall bladder tissue, heart tissue, stomach tissue, liver tissue, ureter tissue, urinary bladder tissue, or a combination of two or more thereof. In embodiments, first component 101 is or includes ligament tissue, tendon tissue, or a combination thereof, and second component 103 is or includes urinary bladder tissue. Without limitation, in embodiments first component 101 is bovine ligament tissue or bovine tendon tissue, and second component is urinary bladder tissue, e.g., of a bovine, equine, or swine.

Although not shown, in the embodiment of FIG. 1 first component 101 is in the form of a strip of or including fibrous connective tissue, which is oriented along an axis Z. In the illustrated embodiment first component 101 is a single strip having a circular cross section, but any number of first component stripes may be used, with each strip having any suitable cross section (round, ellipsoidal, quadrilateral, pentagonal, irregular, etc.).

Second component 103 is disposed on (and in some instances, directly on) an outer surface of first component 101. More particularly, second component 103 extends around the entire peripheral surface of first component 101. This may be accomplished, for example, by providing second component 103 in the form of one or more strip(s) and wrapping the strip(s) of second component 103 around the peripheral surface of first component 101 and around axis Z. Alternatively or additionally, second component 103 may be provided in the form of a hollow tube (e.g., a casing). In such instances, the structure of FIG. 1 may be achieved by positioning the first component 101 within the opening of second component 103, and drying the resultant combination.

In embodiments and as shown in FIG. 1, second component 103 may cover all or substantially all (i.e., greater than or equal to about 95%) of the outer surface of first component 101. Alternatively, in other embodiments a significant portion (e.g., greater than 5%) of the outer surface of first component 101 may be left uncovered by second component 103. For example, first component 101 may be provided in the form of a strip oriented along axis Z. One or more strips of second component 103 may then be wrapped around the periphery of first component 101. When multiple strips of second component 103 are used, the edge(s) of each strip of second component 103 may be spaced apart from the corresponding edge of an adjacent strip, with gap exposing part of the outer surface of first component 101 there between.

Consistent with the above discussion, prior to being formed into chew 100 first component 101 and second component 103 may have a first initial moisture content and a second initial moisture content, respectively, wherein the second initial moisture content is greater than the first initial moisture content. In such instances the combined first and second components (i.e., pet chew precursor) may be subject to a drying process that reduces the first and second initial moisture contents to respective first and second final moisture contents, as discussed above. For example, first component 101 may be provided in the form of one or more strip that is/are or includes tendon tissue, ligament tissue, or a combination thereof, with a first initial moisture content of 50 to 80 weight % (e.g., 60 to 70 weight %), and second component 103 may be provided in the form of one or more strips that is/are or include internal organ (e.g., urinary bladder) tissue having a second initial moisture content that exceeds the first initial moisture content and is in the range of 70 to 95 weight % (e.g., 80 to 90 weight %). Post drying, first component 101 may have a first final moisture content ranging from 0.1 to 20 weight % (e.g., 10-20 weight % or even 12 to 18 weight %), and second component 103 may have a second final moisture content ranging from 0.1 to 20 weight % (e.g., 10 to 20 weight %, or even 10 to 15 weight %). During such drying, second component 103 may shrink relatively more than first component 101, thereby promoting a relatively strong physical shrinkage type fit between first component 101 and second component 103.

Chew 100 may optionally include a natural edible component 105, as shown in FIG. 1. When used, natural edible component 105 may be in the form of an edible adhesive, e.g., a coating of or including casein, cornstarch, glycerin, cellulose, or a combination thereof. Without limitation, in embodiments natural edible component 105 is in the form of a natural edible adhesive coating, and is located on the outer surface of first component 101, e.g., prior to when first component 101 and second component 103 are dried to form a pet chew. In such in such instances when first component 101 and second component 103 are dried, natural edible component 105 may function to adhere the outer surface of first component 101 to the outer surface of second component 103, enhancing the coupling of first component 101 and second component 103 by forming a bond there between.

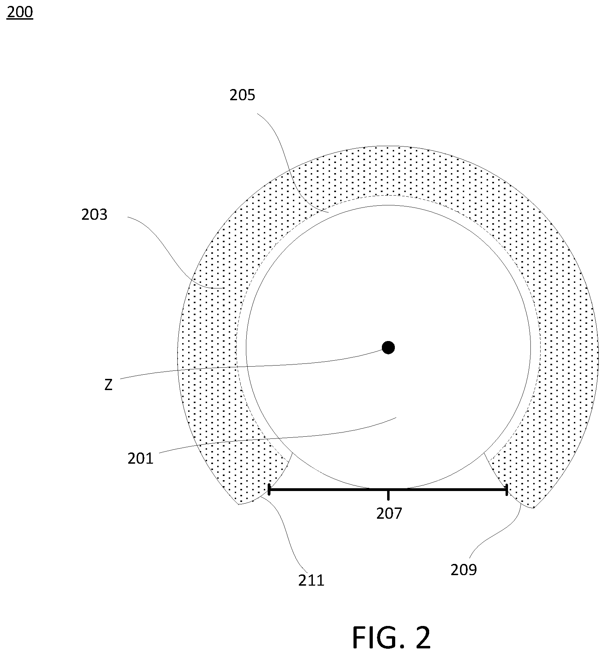

FIG. 2 is a cross sectional diagram of another example animal chew not forming part of the invention. As shown, animal chew 200 includes first component 201 and second component 203, and optionally includes a natural edible component 205. The nature and function of first component 201, second component 203, and optional natural edible component 205 is the same as the first component 101, second component 103, and optional natural edible component 105 discussed above in connection with FIG. 1, and thus is not reiterated.

Like first component 101 in chew 100, first component 201 is depicted in the form of a single strip having a round (e.g., circular cross section), wherein the strip has a long dimension oriented along axis Z. This illustration is for the sake of example only, and multiple strips of first component 201 having any suitable cross-sectional geometry may be used. Like second component 103, second component 203 is in the form of one or more strips that are disposed on (e.g., directly on) an outer surface of first component 201, and which are wrapped about first component 201 around axis Z. Unlike chew 100, however, in chew 200 second component 203 does not extend around the entire peripheral surface of first component 201. Rather, second component 203 extends partially around the peripheral surface of first component 201, such that a gap 207 is present between first end 209 and second end 211 of second component 203.

Various methods may be used to obtain a pet chew with the structure shown in FIG. 2. For example, second component 203 may be provided in the form of one or more short strips that have a length defined between first end 209 and second end 211 and width extending into and out of the plane of the figure, wherein L is less than the distance around the periphery of first component 201. Alternatively, second component 203 may be provided in the form of one or more thin strips that have a length extending into and out of the plane of the figure, and a width defined between first end 209 and second end 211, wherein W is less than the distance around the periphery of first component 201. In either case, prior to drying gap 207 may correspond to the difference between the length or width of second component 203, and the distance around the periphery of first component 201 (e.g., the circumference of first component 201). The size of gap 207 after drying will generally be determined by the degree to which second component 203 shrinks during drying, relative to the first component 201. In embodiments, gap 207 post drying ranges from 1 to 25.4 mm (i.e., 0.04 to 1 inches).

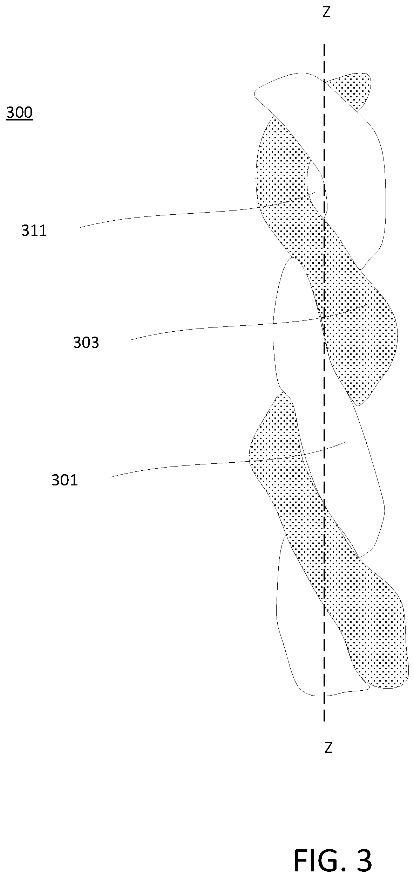

FIG. 3 is a cross sectional diagram of an example animal chew consistent with the present disclosure. As shown, animal chew 300 includes first component 301 and second component 303. Although not shown, animal chew 300 may also include a natural edible component, e.g., in the form of a coating on the outer surface of first component 301, second component 303, or a combination thereof. The nature and function of first component 301, second component 303, and the optional natural edible component is the same as first component 101, 201, second component 103, 203 and optional natural edible component 105, 205 discussed above in connection with FIGS. 1 and 2, and thus is not reiterated.

Unlike chews 100 and 200, first component 301 and second component 303 are in the form of one or more strips that are wrapped around each other. In the illustrated embodiment first and second components 301, 303 generally wrap around one another and along axis Z, but such a configuration is not required. For example, first and second components 301, 303 may wrap around one another, but may not be oriented along axis Z, such that chew 300 does not extend in a generally linear fashion along axis Z as shown in FIG. 3. For example, first and second components 301, 303 may be in the form of one or more strips that wrap around each other, and which intersect axis Z one or more times such that an overall shape of chew 300 is in the form of a bent line (e.g., a C-shape, U-Shape, or S-shape), a closed geometric shape (e.g., a circular, triangular, quadrilateral, pentagonal, hexagonal, or other geometric shape), or an irregular shape.

As noted above an optional natural edible component may be used to enhance the bond between first component 301 and second component 303. In embodiments the optional natural edible component is in the form of an edible coating that is disposed on all or substantially all the outer surfaces of the first component 301 and second component 303. In such embodiments the optional natural edible component may fill interstitial spaces 311 that may be present between first component 301 and second component 303, thereby further enhancing the coupling of such components and improving durability of pet chew 300.

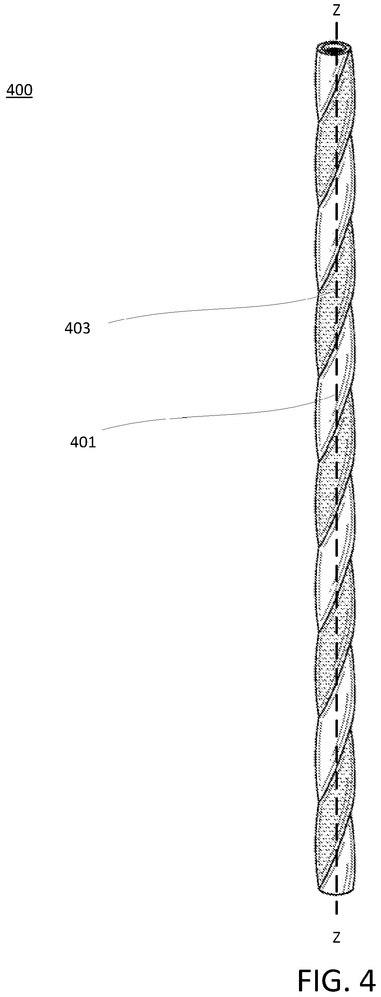

FIG. 4 depicts another example of a pet chew consistent with the present disclosure. As shown, pet chew 400 includes a first component 401 and a second component 403. Although not shown, pet chew 400 may also include an optional edible natural component. The nature and function of such components is the same as the first component, second component, and optional natural edible component of FIGS. 1-3, and so is not reiterated. In this embodiment the first component 401 and second component 403 are each in the form of a strip, and the strips of first and second components 401, 403 are tightly helically wound around one another and around axis Z, such that chew 400 has a relatively tighter structure than chew 300. Like chew 300, an optional natural edible component in the form of an edible coating may be coated on all or substantially all of the outer surfaces of the first component 401 and second component 403, thereby enhancing the coupling of such components.

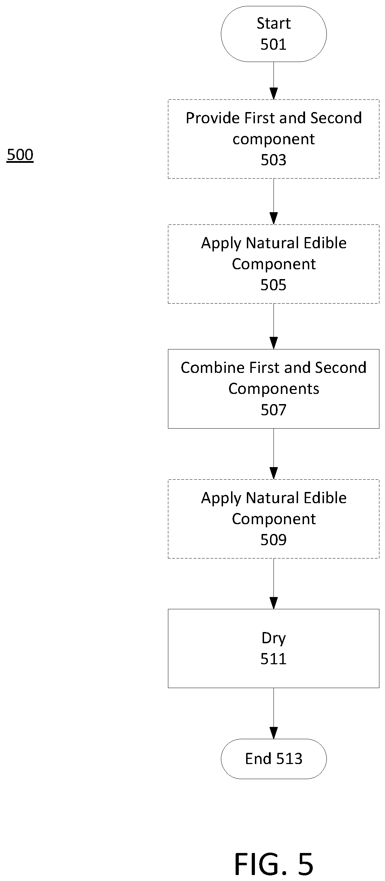

FIG. 5 is a flow chart of example operations of one example method of making a pet chew consistent with the present disclosure. As shown, method 500 begins with start block 501. The method may then proceed to optional block 503, pursuant to which a first component and a second component may be provided.

Consistent with the foregoing discussion the first component includes or is formed from fibrous connective tissue, such as but not limited to tendon tissue, ligament tissue, sclera tissue, or a combination thereof. The first component may be sourced from any suitable animal including those noted above, but is preferably sourced from a bovine, equine, or swine. In embodiments the first component is ligament tissue or tendon tissue of a bovine, such as steer or buffalo.

Also consistent with the foregoing discussion, the second component is or includes internal organ tissue, such as one or more of the internal organ tissues described above. The second component may be sourced from any suitable animal including those noted above, but is preferably sourced from a bovine, equine, or swine. In embodiments the first component is or includes urinary bladder tissue of a bovine, equine, or swine.

The first and second components as provided may each have respective first and second initial moisture contents, wherein the second initial moisture content (i.e., of the second component) is greater than the first initial moisture content (i.e., of the first component). The first initial moisture content ranges from 50 to 80 weight % (e.g., 60 to 70 weight %) relative to the total weight of the first component (prior to drying), and the second initial moisture content ranges from 70 to 95% by weight (e.g., 80 to 90 weight %) relative to the total weight of the second component (prior to drying). In embodiments, the first component is tendon or ligament tissue of a bovine with a first initial moisture content of 60 to 70 weight %, and the second component is urinary bladder tissue of a bovine or swine with a second initial moisture content of 80 to 90 weight %.

The as-provided first and second components are provided in a form of a strip . In embodiments, the first and second components are each in the form of strips having a round, geometric, or irregular cross section. In such instances the strips of first component may have a length of up to 50 centimeters (cm; i.e., 20 inches), such as from 2.5 cm to 50 cm (i.e., 1 to 20 inches), 15.2 cm to 35.6 cm (i.e., 6 to 14 inches), or even 20.3 cm to 30.5 cm (i.e., 8 to 12 inches), and a width of 0.6 to 6.5 cm (0.25 to 2 inches). In contrast, the strips of second component may have a width ranging from 1.0 to 25.4 millimeters (mm) and a length ranging from 2.5 to 50 cm (i.e., 1 to 20 inches). Without limitation, in embodiments the first component is provided in the form of one or more strips of (e.g., bovine or equine) ligament or tendon tissue having a length of 2.5 cm to 50 cm and a width of 0.6 to 6.5 cm (0.25 to 2 inches), and the second component is provided in the form of one or more strips of (e.g., bovine, equine, or swine) urinary bladder tissue having a width of 1.0 to 25.4 mm and a length of 2.5 to 50 cm.

Following the operations of block 503 (or if block 503 is omitted) the method may proceed to optional block 505, pursuant to which an optional edible natural edible component may be applied to the first component, second component or both the first and second components. In embodiments, the optional edible natural edible component is in the form of a liquid that, when dried, forms an adhesive bond between at least a portion of the first and second components. In such instances, the natural edible component may be applied as a liquid coating to the outer surface of the first component, the second component, or both the first and second components. In embodiments, a liquid (e.g., water) containing the natural edible component (e.g., casein, cornstarch, Glycerin, cellulose, or the like) is applied to at least the outer surface of the first component.

Following the operations of block 505 (or if block 505 is omitted) the method may proceed to block 507, pursuant to which the first and second components are combined. In an embodiment not covered by the invention, when the first and second components are in strip form, one or more strips of the second component may be overlaid on the first component, e.g., to form a precursor of a chew having the cross-sectional structure of FIG. 1 or FIG. 2. According to the disclosure, the second component and the first component are couped to form a pet chew by helically winding the strips around one another. For example, one or more strips of the first component may be wound around one or more strips of the second component to form a precursor of a chew having the general shape shown in FIGS. 3 or FIG. 4. Still further, one or more strips of the first and second component may be twisted together, e.g., around a common axis, so as to form a chew precursor.

Following the operations of block 507 the method may proceed to optional block 509, pursuant to which an optional natural edible component may be applied. The nature of the natural edible component that may be applied pursuant to optional block 509 is the same as discussed above in regard to optional block 505, and so is not reiterated. The operations of block 509 may be desirable, for example, when the operations of optional block 505 are omitted, or if additional natural edible component is desired to further enhance the bond between the first and second components, or to enhance some other aspect (e.g., taste, smell, texture, etc.) of the chew.

Following block 509 or if block 509 is omitted the method may proceed to block 511, pursuant to which the chew precursor is dried to form a pet chew. Drying of the chew precursor may be performed using any suitable drying method known in the art, such as but not limited to air-drying, heat drying, vacuum drying, freeze drying, spray drying, or combinations thereof. In embodiments, the operations of block 511 include at least heat drying the product. Such heat drying may be performed, for example, by placing the pet chew precursor in a dryer or an over, and heating the chew at a temperature in the range of 50 °C to 250 °C for a time ranging from 15 minutes to 15 hours.

The drying operations of block 511 will reduce the moisture content of the first component and the second component to below their respective first and second initial moisture content levels. Preferably, drying is carried out until the first component has a first final moisture content and the second component has a second final moisture content, wherein the first and second final moisture contents are within the above described ranges. Without limitation, in embodiments the first component is in the form of one or more strips of (e.g., bovine or equine) tendon tissue or ligament tissue, and is dried to a first final moisture content in the range of 12 to 18% by weight. In such embodiments the second component is in the form of one or more strips of (e.g., bovine, equine, or swine) urinary bladder tissue, and is dried to a second final moisture content in the range of 10 to 15 weight %.

As moisture is removed from the pet chew precursor during the drying operations of block 511, the first component and second component will shrink. Because the second component (as provided) has a relatively higher initial moisture content than the (as provided) first component, the second component will shrink more than the second component during the operations of block 511. Consequently, the second component may be brought into a shrinkage fit engagement with the first component. In embodiments, the shrinkage fit engagement of the first and second component may be sufficient to provide a pet chew with desired chewing durability. In other embodiments, coupling of the first and second components may be enhanced with the natural edible component, which may form an adhesive bond between the first and second components before, during, or after the drying operations of block 511.

The drying operations of block 511 may be carried out until a pet chew with a desired final total moisture content is attained. In embodiments, the drying operations of block 511 are performed until a pet chew with an final total moisture content in the range of 0.1 to 15 weight % (e.g., 0.1 to 10 weight % or even 0.1 to 5 weight %) relative to the total weight of the pet chew is attained. Without limitation, in embodiments the pet chews described herein have an overall moisture content of 0.1 to 5 weight %, relative to the total weight of the pet chew. As may be appreciated, the first initial moisture content, second initial moisture content, and/or final total moisture content may be selected to optimize shrinkage fit of the second component on the first component, to provide a pet chew with a desired shelf life, and which provides a desirable chewing experience for an animal such as a dog. Following the operations of block 511, the method may proceed to block 513 and end.

Because the first and second components are natural components of an animal, the pet chews described herein can attract many pets, such as dogs, in the same or similar manner as a bully stick. That is, the use of the organ tissue (e.g., urinary bladder) as a second component provides a strong attractive characteristic for the subject pet chew. In contrast, use of fibrous connective tissue (e.g., tendon or ligament tissue) for the first component enhances the durability of the chew and can provide a long-lasting chewing experience due to its fibrous structure. As noted above, the number of second component (e.g., urinary bladder) strips that may be combined with the underlying strip(s) of the first component (e.g., tendon, ligament) is limited only by the size of the pet chew as desired for the final product. In preferred embodiment, the first component comprises strips of tendon or ligament tissue, the second component comprises strips of urinary bladder tissue, and the ratio of first component to second component in the pet chew is in the range of 10:1, 5:1, 2:1, or 1:1. Put differently, in embodiments the amount of first component in the pet chew is preferably greater than the amount of second component in the pet chew. This allows the second component to attract an animal such as a dog, while allowing the first component to provide a long lasting chewing experience.

As noted, the pet chews described herein are all natural, have strong attractive qualities and relatively long chew time and palatability. The pet chews can be a source of nutrients, such as proteins and fiber to the pets, are hypo-allergic and retain their freshness, texture and taste over a long period of time. The pet chews may be designed to be fun and also have functional benefits as described above. Moreover, the pet chews may be marketed in a dry form, and do not require expensive storage or transport conditions.

The following examples are additional embodiments of the present disclosure. Examples

Example 1: According to this example there is provided a pet chew, including: a first component including fibrous connective tissue and a second component including internal organ tissue; wherein the second component is coupled to the first component.

Example 2: This example includes any or all the features of example 1, wherein the fibrous connective tissue is ligament tissue, tendon tissue, or a combination thereof.

Example 3: This example includes any or all the features of example 1, wherein the internal organ tissue is selected from the group consisting of esophageal tissue, intestinal tissue, gall bladder tissue, heart tissue, stomach tissue, liver tissue, ureter tissue, urinary bladder tissue, or a combination of two or more thereof.

Example 4: This example includes any or all the features of example 3, wherein the internal organ tissue is urinary bladder tissue.

Example 5: This example includes any or all the features of example 1, wherein: the first component has a first final moisture content ranging from 10 to 20 weight %, relative to the total weight of the first component; and the second component has a second final moisture content ranging from 10 to 20 weight %, relative to the total weight of the second component.

Example 6: This example includes any or all of the features of example 1, wherein: the fibrous connective tissue is ligament tissue, tendon tissue, or a combination thereof; and the internal organ tissue is selected from the group consisting of esophageal tissue, intestinal tissue, gall bladder tissue, heart tissue, stomach tissue, liver tissue, ureter tissue, urinary bladder tissue, or a combination of two or more thereof; the ligament tissue, tendon tissue, or a combination thereof is sourced from a buffalo, bull, camel, cow, deer, donkey, fish, goat, horse, sheep, swine or a combination of two or more thereof; and the internal organ tissue is sourced from a buffalo, bull, camel, cow, deer, donkey, fish, goat, horse, sheep, or a combination of two or more thereof.

Example 7: This example includes any or all the features of example 6, wherein the internal organ tissue is urinary bladder tissue.

Example 8: This example includes any or all the features of example 7, wherein: the first component has a first final moisture content ranging from 10 to 20 weight %, relative to the total weight of the first component; and the second component has a second final moisture content ranging from 10 to 20 weight %, relative to the total weight of the second component.

Example 9: This example includes any or all the features of example 1, further including a natural edible component on an outer surface of the first component, wherein the natural edible component couples the first component to the second component.

Example 10: This example includes any or all the features of example 9, wherein the natural edible component includes casein, cornstarch, glycerin, cellulose, or a combination thereof.

Example 11: This example includes any or all the features of example 8, and further includes a natural edible component on an outer surface of the first component, wherein the natural edible component couples the first component to the second component.

Example 12: This example includes any or all the features of example 11, wherein the natural edible component includes casein, cornstarch, Glycerin, cellulose, or a combination thereof.

Example 13: This example includes any or all the features of example 7, wherein the second component is wrapped around the first component.

Example 14: According to this example there is provided a method of forming a pet chew, including: providing a first component including fibrous connective tissue, the first component having a first initial moisture content ranging from 50% to 80% by weight; providing a second component including internal organ tissue, the second component having a second initial moisture content ranging from 70% to 95% by weight; contacting the second component with an outer surface of the first component; and coupling the second component to the outer surface of the first component to form a pet chew; wherein: coupling the second component to the outer surface of the first component includes drying the first component to a first final moisture content ranging from 10 to 20% by weight; and drying the second component to a second final moisture content ranging from 10 to 20% by weight.

Example 15: This example includes any or all the features of example 14, wherein: the second initial moisture content is greater than the first initial moisture content; and during the drying, the second component shrinks to a greater degree than the first component.

Example 16: This example includes any or all the features of example 14, wherein the drying is performed by air-drying, heat drying, vacuum drying, freeze drying, spray drying, or a combination of two or more thereof.

Example 17: This example includes any or all the features of example 14, wherein the drying includes heat drying at a temperature ranging from 50°C to 250°C for a period ranging from 15 minutes to 15 hours.

Example 18: This example includes any or all the features of example 14, wherein coupling the second component to the surface of the first component further includes applying a coating including a natural edible product to the outer surface of the first component before or after the drying.

Example 19: This example includes any or all the features of example 14, wherein: the fibrous connective tissue is ligament tissue, tendon tissue, or a combination thereof; and the internal organ tissue is selected from the group consisting of esophageal tissue, intestinal tissue, gall bladder tissue, heart tissue, stomach tissue, liver tissue, ureter tissue, urinary bladder tissue, or a combination of two or more thereof.

Example 20: This example includes any or all the features of example 19, wherein the internal organ tissue is urinary bladder tissue.

Example 21: This example includes any or all of the features of example 19, wherein: the ligament tissue, tendon tissue, or a combination thereof is sourced from a buffalo, bull, camel, cow, deer, donkey, fish, goat, horse, sheep, or a combination of two or more thereof; and the internal organ tissue is sourced from a buffalo, bull, camel, cow, deer, donkey, fish, goat, horse, sheep, swine or a combination of two or more thereof.

Example 22: This example includes any or all the features of example 14, wherein: the first final moisture content ranges from 12 to 18% by weight; and the second final moisture content ranges from 10 to 15% by weight.

Example 23: This example includes any or all the features of example 14, wherein coupling the second component to the outer surface of the first component further includes applying a coating including natural edible component to the surface of the first component prior to the drying.

Example 24: This example includes any or all the features of example 23, wherein the natural edible component includes casein, cornstarch, glycerin, cellulose, or a combination thereof.

Example 25: This example includes any or all the features of example 14, wherein contacting the second component with the outer surface of the first component includes wrapping the second component around the outer surface of the first component.

## Claims

1. A pet chew, comprising:
a first component comprising fibrous connective tissue;
a second component comprising internal organ tissue;
wherein the second component is coupled to the first component; and
wherein the first component and the second component are each in a form of a strip and the strips of the first component and the second component are coupled by being helically wound around one another.

2. The pet chew of claim 1, wherein said fibrous connective tissue is ligament tissue, tendon tissue, or a combination thereof.

3. The pet chew of claim 1, wherein said internal organ tissue is selected from the group consisting of esophageal tissue, intestinal tissue, gall bladder tissue, heart tissue, stomach tissue, liver tissue, ureter tissue, urinary bladder tissue, or a combination of two or more thereof.

4. The pet chew of claim 3, wherein said internal organ tissue is urinary bladder tissue.

5. The pet chew of claim 1, wherein:
said first component has a first final moisture content ranging from 10 to 20 weight %, relative to the total weight of the first component; and
said second component has a second final moisture content ranging from 10 to 20 weight %, relative to the total weight of the second component.

6. The pet chew of claim 2, wherein:
said ligament tissue, tendon tissue, or a combination thereof is sourced from a buffalo, bull, camel, cow, deer, donkey, fish, goat, horse, sheep, swine or a combination of two or more thereof.

7. The pet chew of claim 3, wherein:
said internal organ tissue is sourced from a buffalo, bull, camel, cow, deer, donkey, fish, goat, horse, sheep, swine or a combination of two or more thereof.

8. The pet chew of claim 1, further comprising a natural edible component on an outer surface of the first component, wherein the natural edible component couples the first component to the second component.

9. The pet chew of claim 8, wherein the natural edible component comprises casein, cornstarch, Glycerin, cellulose, or a combination thereof.

10. The pet chew of claim 1, wherein the fibrous connective tissue is made of acellular collagen fibers.

11. A method of forming a pet chew, comprising:
providing a first component comprising fibrous connective tissue, the first component in a form of a strip and having a first initial moisture content ranging from 50% to 80% by weight;
providing a second component comprising internal organ tissue, the second component in a form of a strip and having a second initial moisture content ranging from 70% to 95% by weight;
contacting the second component and the first component; and
coupling the second component and the first component to form a pet chew by helically winding the strips around one another;
wherein
coupling further comprises drying the first component to a first final moisture content ranging from 10 to 20% by weight, and drying the second component to a second final moisture content ranging from 10 to 20% by weight.

12. The method of claim 11, wherein:
the second initial moisture content is greater than the first initial moisture content; and
during said drying, the second component shrinks to a greater degree than the first component.

13. The method of claim 11, wherein said drying is performed by air-drying, heat drying, vacuum drying, freeze drying, spray drying, or a combination of two or more thereof.

14. The method of claim 11, wherein said drying comprises heat drying at a temperature ranging from 50°C to 250°C for a period ranging from 15 minutes to 15 hours.

15. The method of claim 11, wherein coupling the second component and the first component further comprises applying a coating comprising a natural edible component to an outer surface of the first component before or after said drying.

## Patentansprüche

1. Haustierkauartikel, umfassend:
eine erste Komponente, umfassend faseriges Bindegewebe;
eine zweite Komponente, umfassend Innenorgangewebe;
wobei die zweite Komponente mit der ersten Komponente gekoppelt ist; und
wobei die erste Komponente und die zweite Komponente jeweils in einer Form eines Streifens vorliegen und die Streifen der ersten Komponente und der zweiten Komponente dadurch gekoppelt sind, dass sie spiralförmig umeinander gewickelt sind.

2. Haustierkauartikel nach Anspruch 1, wobei das faserige Bindegewebe Bändergewebe, Sehnengewebe oder eine Kombination davon ist.

3. Haustierkauartikel nach Anspruch 1, wobei das Innenorgangewebe aus der Gruppe ausgewählt ist, bestehend aus Speiseröhrengewebe, Darmgewebe, Gallenblasengewebe, Herzgewebe, Magengewebe, Lebergewebe, Harnleitergewebe, Harnblasengewebe oder einer Kombination aus zwei oder mehr davon.

4. Haustierkauartikel nach Anspruch 3, wobei das Innenorgangewebe Harnblasengewebe ist.

5. Haustierkauartikel nach Anspruch 1, wobei:
die erste Komponente einen ersten Endfeuchtigkeitsgehalt aufweist, der von 10 bis 20 Gew.-%, bezüglich des Gesamtgewichts der ersten Komponente, reicht; und
die zweite Komponente einen zweiten Endfeuchtigkeitsgehalt aufweist, der von 10 bis 20 Gew.-%, bezüglich des Gesamtgewichts der zweiten Komponente, reicht.

6. Haustierkauartikel nach Anspruch 2, wobei:
das Bändergewebe, Sehnengewebe oder eine Kombination davon von einem Büffel, einem Stier, einem Kamel, einer Kuh, einem Hirsch, einem Esel, einem Fisch, einer Ziege, einem Pferd, einem Schaf, einem Schwein oder einer Kombination aus zwei oder mehr davon stammt.

7. Haustierkauartikel nach Anspruch 3, wobei:
das Innenorgangewebe von einem Büffel, einem Stier, einem Kamel, einer Kuh, einem Hirsch, einem Esel, einem Fisch, einer Ziege, einem Pferd, einem Schaf, einem Schwein oder einer Kombination aus zwei oder mehr davon stammt.

8. Haustierkauartikel nach Anspruch 1, ferner umfassend eine natürliche essbare Komponente auf einer Außenoberfläche der ersten Komponente, wobei die natürliche essbare Komponente die erste Komponente mit der zweiten Komponente koppelt.

9. Haustierkauartikel nach Anspruch 8, wobei die natürliche essbare Komponente Casein, Maisstärke, Glycerin, Cellulose oder eine Kombination davon umfasst.

10. Haustierkauartikel nach Anspruch 1, wobei das faserige Bindegewebe aus azellulären Collagenfasern hergestellt ist.

11. Verfahren zum Formen eines Haustierkauartikels, umfassend:
Bereitstellen einer ersten Komponente, umfassend faseriges Bindegewebe, wobei die erste Komponente in einer Form eines Streifens vorliegt und einen ersten Anfangsfeuchtigkeitsgehalt, der von 50 Gew.-% bis 80 Gew.-% reicht, aufweist;
Bereitstellen einer zweiten Komponente, umfassend Innenorgangewebe, wobei die zweite Komponente in einer Form eines Streifens vorliegt und einen zweiten Anfangsfeuchtigkeitsgehalt, der von 70 Gew.-% bis 95 Gew.-% reicht, aufweist;
Inberührungbringen der zweiten Komponente und der ersten Komponente; und
Koppeln der zweiten Komponente und der ersten Komponente, um einen Haustierkauartikel durch spiralförmiges Umeinanderwickeln der Streifen zu formen;
wobei
das Koppeln ferner ein Trocknen der ersten Komponente auf einen ersten Endfeuchtigkeitsgehalt, der von 10 bis 20 Gew.-% reicht, und das Trocknen der zweiten Komponente auf einen zweiten Endfeuchtigkeitsgehalt, der von 10 bis 20 Gew.-% reicht, umfasst.

12. Verfahren nach Anspruch 11, wobei:
der zweite Anfangsfeuchtigkeitsgehalt größer als der erste Anfangsfeuchtigkeitsgehalt ist; und
während des Trocknens die zweite Komponente in einem größeren Ausmaß als die erste Komponente schrumpft.

13. Verfahren nach Anspruch 11, wobei das Trocknen durch Lufttrocknen, Wärmetrocknen, Vakuumtrocknen, Gefriertrocknen, Sprühtrocknen oder einer Kombination aus zwei oder mehr davon durchgeführt wird.

14. Verfahren nach Anspruch 11, wobei das Trocknen das Wärmetrocknen bei einer Temperatur, die von 50 °C bis 250 °C reicht, für einen Zeitraum, der von 15 Minuten bis 15 Stunden reicht, umfasst.

15. Verfahren nach Anspruch 11, wobei das Koppeln der zweiten Komponente und der ersten Komponente ferner ein Aufbringen einer Beschichtung, umfassend eine natürliche essbare Komponente, auf eine Außenoberfläche der ersten Komponente vor oder nach dem Trocknen umfasst.

## Revendications

1. Article à mâcher pour animaux de compagnie, comprenant :
un premier composant comprenant un tissu conjonctif fibreux ;
un second composant comprenant un tissu d'organe interne ;
dans lequel le second composant est accouplé au premier composant ; et
dans lequel le premier composant et le second composant se présentent chacun sous la forme d'une bande et les bandes du premier composant et du second composant sont accouplées par enroulement hélicoïdal l'une autour de l'autre.

2. Article à mâcher pour animaux de compagnie selon la revendication 1, dans lequel ledit tissu conjonctif fibreux est un tissu ligamentaire, un tissu tendineux ou une combinaison de ceux-ci.

3. Article à mâcher pour animaux de compagnie selon la revendication 1, dans lequel ledit tissu d'organe interne est choisi dans le groupe constitué de tissu œsophagien, tissu intestinal, tissu de vésicule biliaire, tissu cardiaque, tissu stomacal, tissu hépatique, tissu d'uretère, tissu de vessie urinaire, ou une combinaison de deux ou plus de ceux-ci.

4. Article à mâcher pour animaux de compagnie selon la revendication 3, dans lequel ledit tissu d'organe interne est un tissu de vessie urinaire.

5. Article à mâcher pour animaux de compagnie selon la revendication 1, dans lequel :
ledit premier composant a une première teneur en humidité finale comprise entre 10 et 20 % en poids, par rapport au poids total du premier composant ; et
ledit second composant a une seconde teneur en humidité finale comprise entre 10 et 20 % en poids, par rapport au poids total du second composant.

6. Article à mâcher pour animaux de compagnie selon la revendication 2, dans lequel :
ledit tissu ligamentaire, tissu tendineux ou une combinaison de ceux-ci provient d'un buffle, d'un taureau, d'un chameau, d'une vache, d'un cerf, d'un âne, d'un poisson, d'une chèvre, d'un cheval, d'un mouton, d'un porc ou d'une combinaison de deux ou plus de ceux-ci.

7. Article à mâcher pour animaux de compagnie selon la revendication 3, dans lequel :
ledit tissu d'organe interne provient d'un buffle, d'un taureau, d'un chameau, d'une vache, d'un cerf, d'un âne, d'un poisson, d'une chèvre, d'un cheval, d'un mouton, d'un porc ou d'une combinaison de deux ou plus de ceux-ci.

8. Article à mâcher pour animaux de compagnie selon la revendication 1, comprenant en outre un composant naturel comestible sur une surface externe du premier composant, dans lequel le composant naturel comestible accouple le premier composant au second composant.

9. Article à mâcher pour animaux de compagnie selon la revendication 8, dans lequel le composant naturel comestible comprend de la caséine, de l'amidon de maïs, de la glycérine, de la cellulose ou une combinaison de ceux-ci.

10. Article à mâcher pour animaux de compagnie selon la revendication 1, dans lequel le tissu conjonctif fibreux est constitué de fibres de collagène acellulaires.

11. Procédé de fabrication d'un article à mâcher pour animaux de compagnie, comprenant :
la fourniture d'un premier composant comprenant un tissu conjonctif fibreux, le premier composant se présentant sous la forme d'une bande et ayant une première teneur en humidité initiale comprise entre 50 % et 80 % en poids ;
la fourniture d'un second composant comprenant un tissu d'organe interne, le second composant se présentant sous la forme d'une bande et ayant une seconde teneur en humidité initiale comprise entre 70 % et 95 % en poids ;
la mise en contact du second composant et du premier composant ; et
l'accouplement du second composant et du premier composant pour former un article à mâcher pour animaux de compagnie en enroulant les bandes l'une autour de l'autre de manière hélicoïdale ;
dans lequel
l'accouplement comprend en outre le séchage du premier composant jusqu'à une première teneur en humidité finale comprise entre 10 et 20 % en poids, et le séchage du second composant jusqu'à une seconde teneur en humidité finale comprise entre 10 et 20 % en poids.

12. Procédé selon la revendication 11, dans lequel :
la seconde teneur en humidité initiale est supérieure à la première teneur en humidité initiale ; et
au cours dudit séchage, le second composant se rétracte davantage que le premier composant.

13. Procédé selon la revendication 11, dans lequel ledit séchage est effectué par séchage à l'air, séchage à la chaleur, séchage sous vide, séchage par congélation, séchage par pulvérisation, ou une combinaison de deux ou plus de ceux-ci.

14. Procédé selon la revendication 11, dans lequel ledit séchage comprend le séchage à la chaleur à une température allant de 50 °C à 250 °C pendant une période allant de 15 minutes à 15 heures.

15. Procédé selon la revendication 11, dans lequel l'accouplement du second composant et du premier composant comprend en outre l'application d'un revêtement comprenant un composant naturel comestible sur une surface externe du premier composant avant ou après ledit séchage.
